# EUROPÄISCHE PATENTSCHRIFT

(11) **EP 2 640 611 B1**
(45) Veröffentlichungstag und Bekanntmachung des Hinweises auf die Patenterteilung: **20.05.2015**
(21) Anmeldenummer: 11776097.5
(22) Anmeldetag: 19.10.2011
(51) Int. Cl.: B60S 1/38, B60S 1/40, B60S 1/52

(54) **WISCHARMANORDNUNG UND VERFAHREN ZUM VERBINDEN EINES WISCHBLATTS MIT EINEM WISCHARM**
WIPER DEVICE AND METHOD TO ATTACH A WIPERBLADE TO A WIPERARM
ESSUIE GLACE ET METHODE POUR ATTACHER UN BALAI D'ESSUIE-GLACE A UN BRAS D'ESSUIE-GLACE.

(30) Priorität: 16.11.2010 DE 102010052308
(43) Veröffentlichungstag der Anmeldung: 25.09.2013
(73) Patentinhaber: Daimler AG, 70327 Stuttgart (DE)
(72) Erfinder: DÜSTERHÖFT, Richard, 71088 Holzgerlingen (DE); FITTERER, Holger, 76287 Rheinstetten (DE); RENZ, Uwe, 70794 Filderstadt-Harthausen (DE); SCHMID, Heiko, 71739 Oberriexingen (DE); ZYGAN, Andreas, 76316 Malsch (DE)
(74) Vertreter: JENSEN & SON
(86) Internationale Anmeldenummer: PCT/EP2011/005255
(87) Internationale Veröffentlichungsnummer: WO 2012/065669

(56) Entgegenhaltungen:
- DE-A1-102008 021 457
- DE-A1-102008 049 269

## Beschreibung

Die Erfindung betrifft eine Wischarmanordnung mit einem Wischarm einer Scheibenwischanlage eines Fahrzeugs und mit einem wenigstens eine Leitung aufweisenden Anschlusselement. Das Anschlusselement ist mit einem Anbindungselement koppelbar, welches zum Halten eines Wischblatts und zum Verbinden des Wischblatts mit dem Wischarm ausgebildet ist. Durch das Koppeln des Anschlusselements mit dem Anbindungselement ist wenigstens eine korrespondierende Leitung des Anbindungselements an die wenigstens eine Leitung des Anschlusselements anschließbar. Das Anbindungselement ist in eine Montagerichtung an das Anschlusselement montierbar, welche zumindest im Wesentlichen mit einer Längserstreckungsrichtung des Wischarms zusammenfällt. Des Weiteren betrifft die Erfindung ein Verfahren zum Verbinden eines Wischblatts mit einem Wischarm einer Scheibenwischanlage eines Fahrzeugs.

Die DE 10 2008 049 269 A1 beschreibt eine Verbindung eines Wischblatts mit einem Wischarm über einen Adapter, welcher mit zwei im Wischblatt verlegten Kanälen für Waschflüssigkeit gekoppelt ist. Die Waschflüssigkeit wird, vom Wischarm her kommend, über den Adapter in das Wischblatt geleitet. Der Adapter wird zusammen mit dem Wischblatt in Längserstreckungsrichtung des Wischarms an diesen montiert und hierbei mit einem Anschlussstecker verbunden, der im Wischarm fixiert ist. Ein Adapteroberteil ist mit einem Adapterunterteil über einen Gelenkbolzen gelenkig verbunden, welcher durch das Adapterunterteil hindurchgeführt ist. An einer Stirnseite des Adapteroberteits sind zwei Schlauchstücke angeordnet, welche die Waschflüssigkeit aus den im Adapteroberteil in Längserstreckungsrichtung des Wischarms verlaufenden Leitungen aufnimmt. Über die beiden flexiblen und eine Schlinge aufweisenden Schlauchstücke wird die Waschflüssigkeit den beiden in Längserstreckungsrichtung des Wischblatts verlaufenden Kanälen zugeführt.

Die DE 10 2008 021 457 A1 beschreibt ein Wischblatt, welches mittels eines zweiteiligen Adapters an einem Wischarm einer Scheibenwischanlage festlegbar ist. Wischarmseitig sind zwei am Wischarm fixierte Anschlussleitungen vorgesehen, welche mit zwei an einem Adapteroberteil angeordneten Kanälen verbunden werden, wenn der Adapter zusammen mit dem Wischblatt von vorne, also in Längsstreckungsrichtung des Wischarms, in einen Endbereich des Wischarms eingeführt wird. Das Adapteroberteil ist auf einem ein Adapterunterteil durchgreifenden Gelenkbolzen gelenkig gelagert. An dem Adapterunterteil sind ebenfalls zwei Kanäle für Waschflüssigkeit ausgebildet, über welche entlang des Wischblatt verlaufende Leitungen mit der Waschflüssigkeit beaufschlagbar sind.

Als nachteilig ist hierbei der Umstand anzusehen, dass das Verbinden des Wischblatts mit dem Wischarm über den Adapter für eine Bedienperson vergleichsweise schwierig ist.

Aufgabe der vorliegenden Erfindung ist es daher, eine Wischarmanordnung und ein Verfahren der eingangs genannten Art zu schaffen, welche bzw. welches ein Verbinden des Wischblatts mit dem Wischarm vereinfacht.

Diese Aufgabe wird durch eine Wischarmanordnung mit den Merkmalen des Patentanspruchs 1 und durch ein Verfahren mit den Merkmalen des Patentanspruchs 12 gelöst. Vorteilhafte Ausgestaltungen mit zweckmäßigen Weiterbildungen der Erfindung sind in den abhängigen Patentansprüchen angegeben.

Die erfindungsgemäße Wischarmanordnung umfasst einen Wischarm einer Scheibenwischanlage eines Fahrzeugs und ein Anschlusselement, welches wenigstens eine Leitung aufweist. Das Anschlusselement ist mit einem zum Halten eines Wischblatts und zum Verbinden des Wischblatts mit dem Wischarm ausgebildeten Anbindungselement koppelbar. Durch das Koppeln ist wenigstens eine korrespondierende Leitung des Anbindungselements an die wenigstens eine Leitung des Anbindungselements anschließbar. Das Anbindungselement ist eine Montagerichtung an das Anschlusselement montierbar, welche zumindest im Wesentlichen einer Längserstreckungsrichtung des Wischarms gleich ist. Hierbei ist das Anschlusselement in die Längserstreckungsrichtung des Wischarms bewegbar an dem Wischarm angeordnet. Es kann also das Anschlusselements besonders nahe hin zu einem Ende des Wischarms bewegt werden, von welchem aus das Anbindungselement in den Wischarm einbringbar ist. Hier, also nahe dem Ende des Wischarms, ist das Anschlusselement dann besonders gut zugänglich, sodass das Anbindungselement besonders einfach mit dem Anschlusselement gekoppelt werden kann.

Ebenso kann das Anbindungselement beim Demontieren des Wischblatts vom Wischarm besonders leicht von dem Anschlusselement getrennt werden, wenn sich das Anschlusselement näher an dem Ende des Wischarms befindet als dies in einer Betriebsstellung oder Funktionsstellung des Anschlusselements der Fall ist. In der Funktionsstellung sind die Leitungen des Anschlusselements und des Anbindungselements miteinander gekoppelt, und der Wischarm kann das Anbindungselement, welches das Wischblatt hält, sicher über die zu wischende Scheibe führen.

In einer vorteilhaften Ausgestaltung der Erfindung ist das Anschlusselement in einem mit dem Anbindungselement gekoppelten Zustand durch Bewegen des Anbindungselements in die Längserstreckungsrichtung des Wischarms bewegbar. Das Anbindungselement ist nämlich gut zugänglich und so von einer Bedienperson besonders einfach handhabbar. Daher ist es günstig, wenn die Bedienperson durch Ziehen an dem Anbindungselement oder durch Schieben des Anbindungselements das Anschlusselement entlang des Wischarms in dessen Längserstreckungsrichtung verschieben kann.

Von Vorteil ist es weiterhin, wenn ein Endbereich des Wischarms wenigstens eine Rastöffnung aufweist, in welcher in einer Funktionsstellung des Anbindungselements ein korrespondierendes Rastelement des Anbindungselements aufnehmbar ist. Ein solches Einrasten des Rastelements in der Rastöffnung dient dem Sichern des Anbindungselements in seiner Lage bezogen auf die Längserstreckungsrichtung des Wischarms. Durch das In-Eingriff-Bringen des Rastelements in die Rastöffnung ist die Funktionsstellung des Anbindungselements eindeutig definierbar. Zudem ist das Einrasten des Rastelements in der Rastöffnung von der Bedienperson hörbar und auch spürbar, also haptisch erfassbar. Insbesondere, wenn die Rastöffnung in einem Rücken des Wischarms angeordnet ist, ist das Einrasten des Rastelements in der Rastöffnung auch optisch besonders gut von der Bedienperson wahrnehmbar.

Hierbei hat es sich als vorteilhaft gezeigt, wenn wenigstens ein an dem Anschlusselement angeordnetes Rastelement durch ein Verbringen des Anschlusselements in eine Montageposition in die im Endbereich des Wischarms angeordnete wenigstens eine Rastöffnung einbringbar ist. Dann kann von der Bedienperson einfach festgestellt werden, ob sich das Anschlusselement in der Montageposition befindet, in welcher das Montieren des Anbindungselements an das Anschlusselement oder das Demontieren des Anbindungselements von dem Anschlusselement erfolgen kann. In der Montageposition ist zudem das Anschlusselement durch das - hörbare und spürbare - Einrasten des Rastelements in die Rastöffnung in seiner Lage gesichert.

In einer weiteren vorteilhaften Ausgestaltung der Erfindung ist beim Verbringen des Anschlusselements in die Montageposition das Anschlusselement an einer wischarmseitigen Führung geführt, bevor das wenigstens eine Rastelement des Anschlusselements in die im Endbereich des Wischarms angeordnete korrespondierende Rastöffnung eingreift. Die Führung stellt sicher, dass das Anschlusselement besonders einfach in die Längserstreckungsrichtung bewegt werden kann. Zudem ist durch die Führung verhindert, dass sich das Anschlusselement nach in eine nicht gewünschte Richtung, insbesondere nach unten, aus dem Endbereich des Wischarms herausbewegen kann.

Als weiter vorteilhaft hat es sich hierbei gezeigt, wenn bei in der Montageposition an dem Wischarm fixiertem Anschlusselement das Anbindungselement durch ein weiteres Bewegen des Anbindungselements in die Längserstreckungsrichtung des Wischarms von dem Anschlusselement lösbar ist. Dadurch kann sichergestellt werden, dass ein Trennen des Anbindungselements von dem Anschlusselement erst dann möglich ist, wenn das Anschlusselement seine Montageposition erreicht hat und in dieser Montageposition fixiert ist. Beim Trennen von Anschlusselement und Anbindungselement können miteinander korrespondierende Rastelemente außer Eingriff gebracht werden, da dies von der Bedienperson besonders gut hörbar und fühlbar ist.

Um die Montageposition besonders sicher vorzugeben, kann die Wischarmanordnung wenigstens einen Anschlag umfassen, welcher die Bewegung des Anschlusselements in die Längserstreckungsrichtung des Wischarms bei in die Montageposition verbrachtem Anschlusselement begrenzt.

Bevorzugt ist die wenigstens eine Leitung zum Einbringen von Waschflüssigkeit und/oder Heizenergie in das Anbindungselement ausgebildet. Über das Anbindungselement kann dann die Waschflüssigkeit und/oder die Heizenergie weiter in das Wischblatt eingebracht werden. Wenn über die wenigstens eine Leitung Waschflüssigkeit in das Anbindungselement einbringbar ist, ist es möglich, über das Anbindungselement bzw. über das Wischblatt Waschflüssigkeit auf die zu wischende Scheibe aufzubringen. Dies ermöglicht es, die Waschflüssigkeit besonders sparsam einzusetzen, also eine besonders geringe Dosierung der Waschflüssigkeit zur Reinigung der Scheibe vorzusehen. Zudem behindert kein zeitlich deutlich vor dem Wischen der Scheibe auf diese aufgebrachter Wischstrahl die Sicht eines Fahrzeugnutzers durch die Scheibe, wenn die Waschflüssigkeit aus dem Anbindungselement oder direkt aus dem Wischblatt austritt.

Wenn die Leitung zum Einbringen von Heizenergie in das Anbindungselement und von diesem weiter in das Wischblatt ausgebildet ist, kann durch Beheizen des Wischblatts verhindert werden, dass im Winter das Wischblatt an der Scheibe festfriert. Zudem kann so ein besonders geräuscharmes Wischen der Scheibe sichergestellt werden, da ein an dem Wischblatt angeordneter Wischgummi durch das Beheizen in einem Temperaturbereich gehalten werden kann, in welchem er vergleichsweise leicht verformbar ist und das Umlegen des Wischgummis beim Wischen der Scheibe besonders geräuscharm erfolgt.

Wenn die Leitung sowohl zum Einbringen von Waschflüssigkeit als auch von Heizenergie in das Wischblatt ausgebildet ist, kann durch die Beheizung auch der Waschflüssigkeit führende Bereich des Wischblatts eisfrei gehalten werden. Zudem kann die warme Waschflüssigkeit zum Enteisen der Scheibe genutzt werden.

In einer weiteren vorteilhaften Ausgestaltung der Erfindung umfasst die Wischarmanordnung das Anbindungselement. Das Anbindungselement weist wenigstens ein Rastelement auf, welches eine in die Montagerichtung offene Ausnehmung umfasst, in welcher im mit dem Anschlusselement gekoppelten Zustand ein an dem Anschlusselement angeordneter Zapfen verrastet aufgenommen ist. Es kann so das Erreichen des mit dem Anschlusselement gekoppelten Zustands akustisch von der Bedienperson wahrgenommen werden, ebenso wie das Entriegeln des Anbindungselements, wenn das Rastelement den an dem Anschlusselement angeordneten Zapfen freigibt.

Zudem kann durch die Gestaltung der in die Montagerichtung offenen Ausnehmung besonders leicht eingestellt werden, mit welcher Kraft an dem Anbindungselement gezogen werden muss, um dieses von dem Anschlusselement zu trennen bzw. welcher Kraft es bedarf, um das Anbindungselement durch Schieben desselben in die Montagerichtung mit dem Anschlusselement zu koppeln. Als Rastelement kann insbesondere ein sogenannter Omegaklipp vorgesehen sein, dessen beide Arme den Zapfen in mit dem Anschlusselement gekoppelten Zustand des Anbindungselements zumindest hintergreifen oder weitgehend, insbesondere vollständig, umschließen.

In einer weiteren vorteilhaften Ausgestaltung der Erfindung, in welcher die Wischarmanordnung das Anbindungselement aufweist, umfasst das Anbindungselement ein an dem Wischarm angeordnetes Oberteil, an welchem ein zum Halten des Wischblatts ausgebildetes Unterteil des Anbindungselements um eine Drehachse drehbar gelagert ist. Auf diese Weise ist eine Relativbewegung des Unterteils gegenüber dem an dem Wischarm angeordneten Oberteil ermöglicht. So kann sich das Wischblatt dem Verlauf der in der Regel gekrümmten Scheibenoberfläche anpassen, wenn der Wischarm das Wischblatt über die Scheibe des Fahrzeugs bewegt.

Das Einführen des Anbindungselements in den Endbereich des Wischarms kann durch ein Einführelement, etwa eine Einführschräge, erleichtert werden, welche an dem Unterteil des Anbindungselements ausgebildet sein kann. Dies erleichtert die Montage des Anbindungselements an den Wischarm und das Demontieren des Anbindungselements bzw. des mit dem Anbindungselement gekoppelten Wischblatts.

Schließlich hat es sich als vorteilhaft gezeigt, wenn in einer Funktionsstellung des Anbindungselements wenigstens ein Anschlag des Oberteils mit dem Wischarm in Anlage ist. Dadurch kann das Erreichen der Funktionsstellung besonders sicher von der Bedienperson erfasst werden. Zusätzlich oder alternativ kann in der Funktionsstellung des Anbindungselements wenigstens eine Unterseite des Oberteils auf einer an dem Wischarm bereitgestellten Führung aufliegen. Auf diese Weise ist das Anbindungselement in der Funktionsstellung gegen ein Sich-Herausbewegen aus dem Wischarm nach unten gesichert.

Bei dem erfindungsgemäßen Verfahren zum Verbinden eines Wischblatts mit einem Wischarm einer Scheibenwischanlage eines Fahrzeugs wird ein wenigstens eine Leitung aufweisendes Anschlusselement mit einem Anbindungselement gekoppelt, welches zum Halten des Wischblatts und zum Verbinden des Wischblatts mit dem Wischarm ausgebildet ist. Durch das Koppeln des Anschlusselements mit dem Anbindungselement wird wenigstens eine korrespondierende Leitung des Anbindungselements an die wenigstens eine Leitung des Anschlusselements angeschlossen. Das Anbindungselement wird in eine Montagerichtung an das Anschlusselement montiert, welche zumindest im Wesentlichen mit einer Längserstreckungsrichtung des Wischarms zusammenfällt. Hierbei wird das mit dem Anbindungselement gekoppelte Anschlusselement in die Längserstreckungsrichtung des Wischarms bewegt. Eine analoge Bewegung des Anschlusselements entlang des Wischarms erfolgt auch beim Lösen des Wischblatts vom Wischarm, wobei hier das mit dem Anbindungselement gekoppelte Anschlusselement in die entgegengesetzte Richtung bewegt wird, nämlich hin zu einem Ende des Wischarms. Dieses Verfahren ermöglicht ein vereinfachtes Verbinden des Wischblatts mit dem Wischarm und ein vereinfachtes Lösen des Wischblatts von dem Wischarm.

Die für die erfindungsgemäße Wischarmanordnung beschriebenen Vorteile und bevorzugten Ausführungsformen gelten auch für das erfindungsgemäße Verfahren und umgekehrt.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: ein an einem Wischarm einer Scheibenwischanlage eines Fahrzeugs mittels eines Adapters beweglich gehaltenes, wasserführendes und beheizbares Wischblatt, wobei der Adapter mit einem Kombistecker gekoppelt ist, welcher in einem Endbereich des Wischarms aufgenommen ist;
- Fig. 2: in perspektivischer Ansicht den Wischarm mit seinem im Querschnitt ein U-Profil aufweisenden Endbereich sowie den Kombistecker;
- Fig. 3: in perspektivischer Ansicht einen ein Oberteil des Adapters bildenden Schieber sowie einen Reiter, welcher ein Unterteil des Adapters bildet und welcher das Wischblatt hält;
- Fig. 4: in einer Seitenansicht eine Verbindungsanordnung, welche den Wischarm und das Wischblatt umfasst, wobei der Adapter sich in seiner Funktionsstellung befindet;
- Fig. 5: die Verbindungsanordnung gemäß Fig. 4 in einer Ansicht in Richtung der Längserstreckung des Wischblatts bzw. des Wischarms;
- Fig. 6: die Verbindungsanordnung gemäß Fig. 4 mit in eine Montageposition hin zu einem vorderen Ende des Wischarms verschobenem Kombistecker; und
- Fig. 7: in einer Seitenansicht den in die Längserstreckungsrichtung des Wischarms aus dem Endbereich desselben herausgezogenen Adapter, welcher das Wischblatt hält, sowie den Wischarm mit dem Kombistecker.

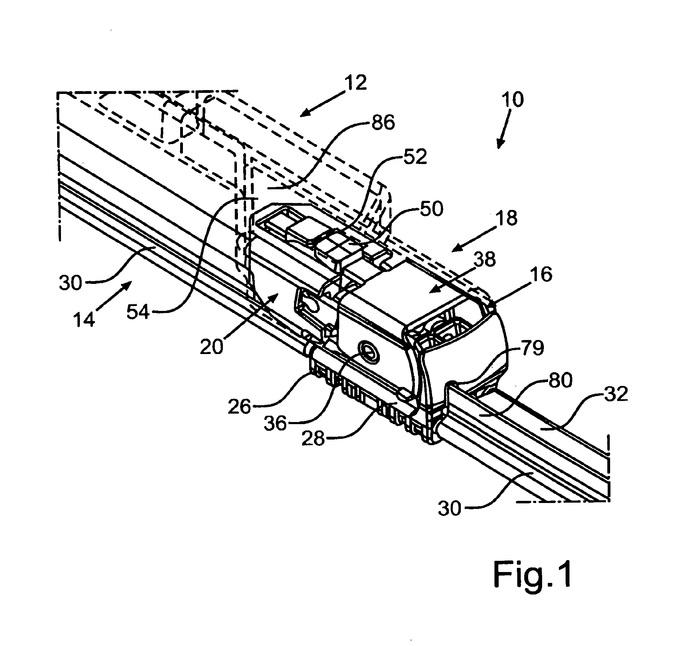

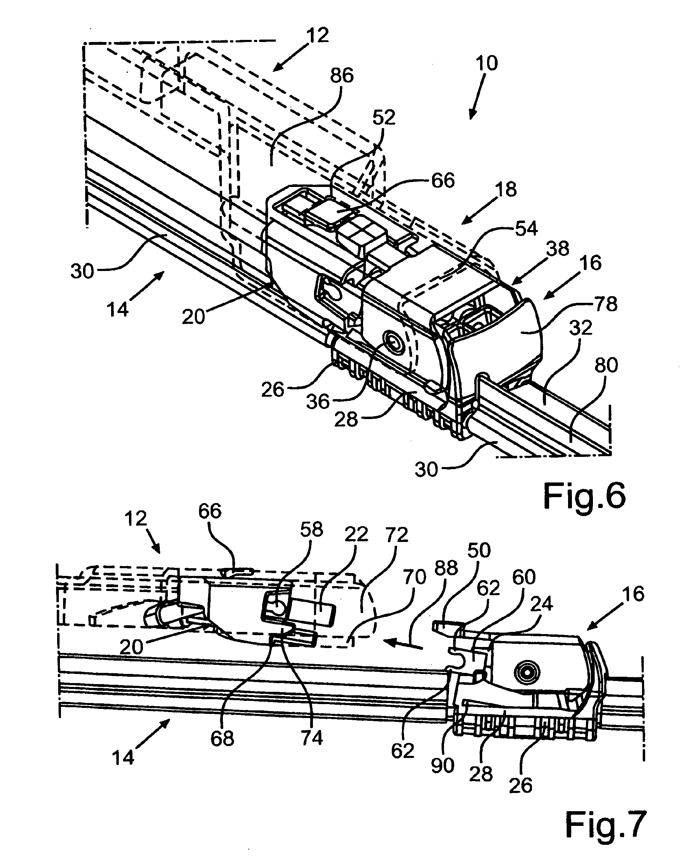

Fig. 1 zeigt eine Verbindungsanordnung 10 einer Scheibenwischanlage eines Fahrzeugs, wobei ein Wischarm 12 der Verbindungsanordnung 10 mit einem wasserführenden und beheizbaren Wischblatt 14 gekoppelt ist. Das Wischblatt 14 ist mittels eines Adapters 16 an einem Endbereich 18 des Wischarms 12 beweglich gehalten. Der Adapter 16 (vgl. Fig. 7) ist in seiner in Fig. 1 gezeigten Funktionsstellung mit einem Kombistecker 20 gekoppelt, welcher im Endbereich 18 des Wischarms 12 angeordnet ist.

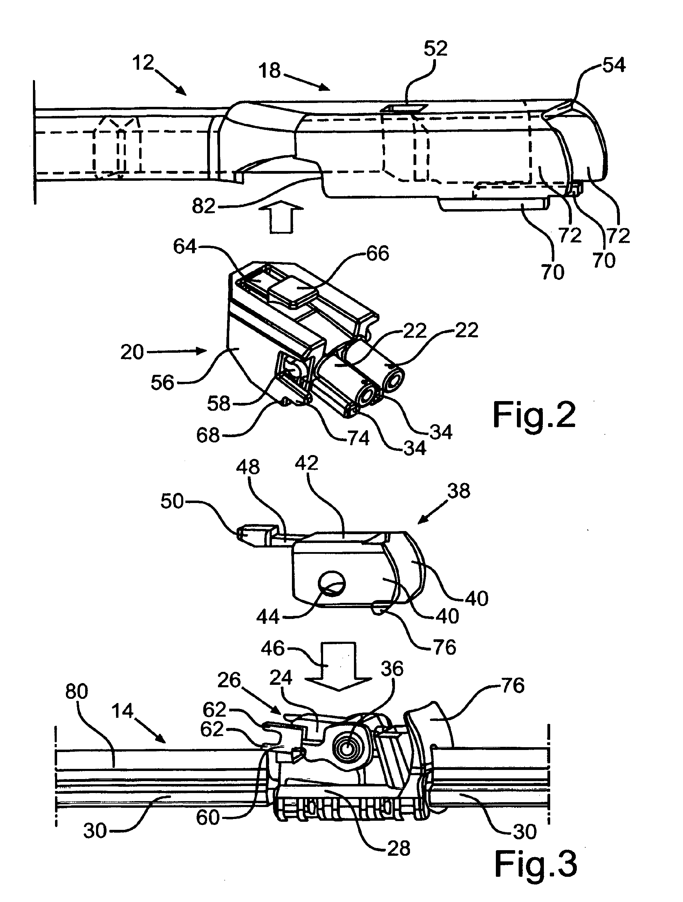

Der Kombistecker 20 (vgl. Fig. 2) weist zwei sich in Längserstreckungsrichtung des Wischarms 12 erstreckende Kanalstücke 22 auf, welche beim Koppeln des Adapters 16 mit dem Kombistecker 20 an zwei korrespondierende Leitungen 24 angeschlossen werden, welche in einem ein Unterteil bildenden Reiter 26 des Adapters 16 ausgebildet sind (vgl. Fig. 3). Jede der beiden Leitungen 24 des Reiters 26 mündet in eine Verbindungsleitung 28, welche einstückig mit dem Reiter 26 ausgebildet ist, und welche in Längserstreckungsrichtung des Wischblatts 14 verläuft.

Die beiden Verbindungsleitungen 28 sind mit jeweils zwei Kanälen 30 fluidisch gekoppelt, welche in einem Spoiler 32 des Wischblatts 14 ausgebildet sind. Über die Kanalstücke 22 des Kombisteckers 20 kann Waschflüssigkeit in die Kanäle 30 des Wischblatts 14 eingebracht werden. Beim Wischen der Scheibe des Fahrzeugs mit dem Wischblatt 14 kann über (nicht gezeigte) Auslässe, insbesondere über Düsen, die Waschflüssigkeit aus den Kanälen 30 auf die Scheibe aufgebracht werden.

Der Kombistecker 20 umfasst des Weiteren zwei sich in die gleiche Richtung wie die Kanalstücke 22 erstreckende elektrische Anschlüsse 34, welche mit entsprechenden (nicht gezeigten) elektrischen Leitungen verbunden werden. Die elektrischen Leitungen führen über den Reiter 26 in das Wischblatt 14 und ermöglichen ein Beheizen des Wischblatts und/oder der Waschflüssigkeit. Durch das Beheizen des Wischblatts 14 kann verhindert werden, dass dieses im Winter festfriert. Zudem können Umlegegeräusche eines (nicht gezeigten) Wischgummis des Wischblatts 14 gering gehalten werden, wenn der Wischgummi in einem günstigen Temperaturbereich gehalten wird. Durch das Beheizen des Wischblatts 14 können auch die wasserführenden Kanäle 30 im Wischblatt 14 eisfrei gehalten werden, und die warme Waschflüssigkeit kann zum Enteisen der Scheibe des Fahrzeugs genutzt werden.

Ein Schieber 38 (vgl. Fig. 3) bildet ein Oberteil des Adapters 16. Der Reiter 26 des Adapters 16 ist um eine Drehachse 36 gegenüber dem Schieber 38 bewegbar, welcher in der in Fig. 1 gezeigten Funktionsstellung oder Arbeitsstellung des Adapters 16 im Endbereich 18 des Wischarms 12 angeordnet ist. Durch die Schwenkbarkeit des das Wischblatt 14 haltenden Reiters 26 gegenüber dem Schieber 38 kann sich das Wischblatt dem Verlauf der in der Regel gekrümmten Scheibenoberfläche anpassen, wenn der Wischarm 12 das Wischblatt 14 im Wischbetrieb über die Scheibe bewegt.

Der Schieber 38 weist im Querschnitt ein U-Profil auf und umfasst zwei Seitenwände 40, welche über einen Rücken 42 miteinander verbunden sind (vgl. Fig. 3). In den Seitenwänden 40 ist eine Durchtrittsöffnung 44 angeordnet, durch welche im mit dem Reiter 26 verbundenen Zustand des Schiebers 38 die Drehachse 36 des Schiebers 38 hindurchtritt. Das Montieren des Schiebers 38 von oben auf den Reiter 26 ist in der Fig. 3 durch einen die Montagerichtung angegebenen Pfeil 46 veranschaulicht.

Von dem Rücken 42 des Schiebers 38 erstreckt sich eine Rastzunge 48 in Längserstreckungsrichtung des Wischblatts 14 nach hinten, welche einen Rastpin 50 umfasst. In der in Fig. 1 gezeigten Funktionsstellung des Adapters 16 tritt der Rastpin 50 durch eine Rastöffnung 52 hindurch, welche in einem Rücken 54 des in seinem Endbereich 18 ebenfalls ein U-Profil aufweisenden Wischarms 12 ausgebildet ist.

Um das Wischblatt 14 vom Wischarm 12 zu lösen, drückt eine Bedienperson den Rastpin 50 nach unten und der Adapter 16 kann in die Längserstreckungsrichtung des Wischarms 12, welche der Längserstreckungsrichtung des Wischblatts 14 gleich ist, nach vorne ein Stück weit aus dem Endbereich 18 des Wischarms 12 herausgezogen werden (vgl. Fig. 6).

Wenn der Adapter16 mit dem Kombistecker 20 gekoppelt ist und entsprechend die Kanalstücke 22 sowie die elektrischen Anschlüsse 34 mit den korrespondierenden Leitungen 24 bzw. den elektrischen Leitungen des Adapters 16 verbunden sind, sind zwei an jeweiligen Seitenwänden 56 des Kombisteckers 20 ausgebildete Zapfen 58 in einer Ausnehmung eines Rastelements 60 aufgenommen, welche an Außenseiten des Reiters 26 angeordnet ist.

Die Rastelemente 60 des Reiters 26 mit ihrer in die Montagerichtung des Adapters 16 an den Kombistecker 20 offenen Ausnehmung sind vorliegend als Omega-Klipps ausgebildet (vgl. Fig. 3), wobei zwei die Ausnehmung seitlich begrenzender Arme 62 in der mit dem korrespondierenden Zapfen 58 verrasteten Stellung den Zapfen 58 hintergreifen. Dadurch, dass der Adapter 16 über die beiden Omega- Klipps mit dem Kombistecker 20 fest verbunden ist, folgt beim Bewegen des Adapters 16 in die Längserstreckungsrichtung des Wischarms 12 der Kombistecker 20 dieser Bewegung des Adapters 16. Zudem ist der mit dem Adapter 16 gekoppelte Kombistecker 20 zusammen mit dem Adapter 16 um die Drehachse 36 bewegbar, wobei eine Bewegbarkeit um etwa +/- 5° gegenüber der Horizontalen vorgesehen sein kann.

Der Kombistecker 20 weist - wie der Schieber 38 - an seiner Oberseite eine Rastzunge 64 mit einem Rastpin 66 auf. Wird nach dem durch das Drücken auf den Rastpin 50 des Adapters 16 bewirkten Entriegeln des Adapters 16 dieser und mit diesem das Wischblatt 14 nach vorne in die in Fig. 6 gezeigte Montageposition verschoben, so rastet der Rastpin 66 des Kombisteckers 20 in der Durchtrittsöffnung 52 ein, welche in dem Rücken 54 des Wischarms 12 in dessen Endbereich 18 vorgesehen ist.

Dadurch ist der Kombistecker 20 in Bezug auf die Längserstreckungsrichtung des Wischarms 12 fixiert, sobald der Rastpin 66 des Kombisteckers 20 durch die Rastöffnung 52 hindurchtritt. Zudem sorgt ein an einer Unterseite des Kombisteckers 20 ausgebildeter vorderer Anschlag 68 dafür, dass sich der Kombistecker 20 mit dem Erreichen der Montageposition in dem Endbereich 18 des Wischarms 12 nicht weiter auf das nach vorne hin offene Ende des Wischarms 12 zu bewegen kann. Der Anschlag 68 läuft nämlich auf eine Führungsleiste 70 auf (vgl. Fig. 2), welche von einem Schenkel 72 des im Endbereich 18 ein U-Profil aufweisenden Wischarms 12 nach innen vorsteht (vgl. Fig. 7).

Oberhalb des Anschlags 68 bildet die Seitenwand 56 des Kombisteckers 20 einen in die Längserstreckungsrichtung des Wischarms 12 nach vorne vorstehenden Vorsprung 74 (vgl. Fig. 2). Eine Unterseite des Vorsprungs 74 läuft beim Verschieben des Kombisteckers 20 in die Längserstreckungsrichtung des Wischarms 12 auf die Führungsleistung 70 auf, bevor der Rastpin 66 die Durchtrittsöffnung 52 in dem Rücken 54 des Wischarms 12 erreicht hat (vgl. Fig. 7). Der Vorsprung 74 ist vorliegend zu der auf die Führungsleiste 70 auflaufenden Unterseite hin angeschrägt, um das Geführt-Werden des Kombisteckers 20 an der Führungsleiste 70 zu erleichtern.

Die an den beiden Schenkeln 72 des Wischarms 12 in dessen Endbereich 18 angeordneten Führungsleisten 70 sorgen somit dafür, dass sich der in seine in Fig. 6 gezeigte Montageposition verbrachte Kombistecker 20 weder nach vorne noch nach unten aus dem Endbereich 18 herausbewegen kann.

Wenn der Kombistecker 20 in der in Fig. 6 und Fig. 7 gezeigten Montageposition fixiert ist, kann durch Ziehen an dem Wischblatt 14 oder an dem Adapter 16 in die Längserstreckungsrichtung des Wischarms 12 der Adapter 16 von dem Kombistecker 20 getrennt werden. Die Montageposition des Kombisteckers 20 stellt somit ebenfalls eine Demontageposition dar.

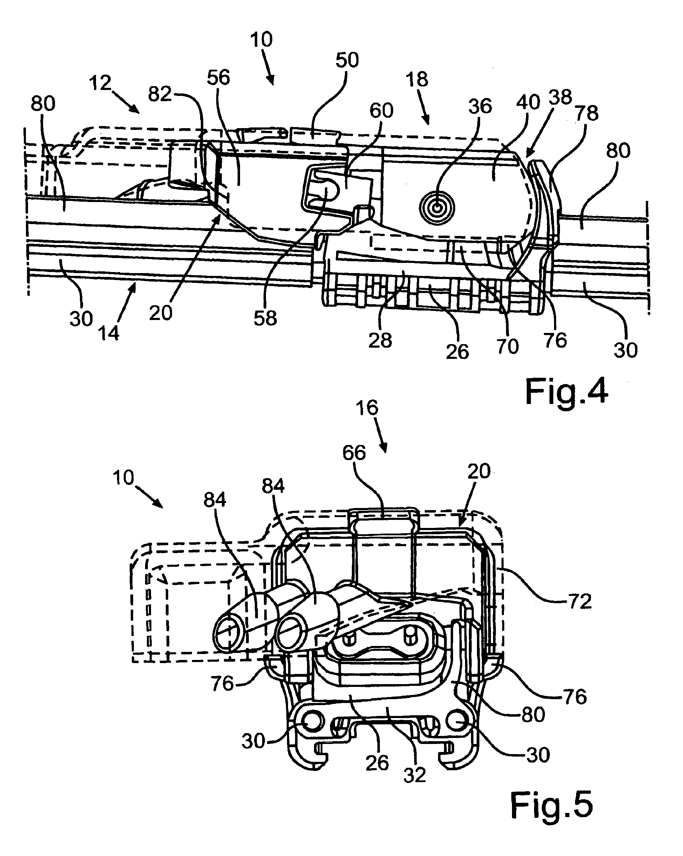

Wie aus Fig. 4 hervorgeht, ruhen Unterseiten der Seitenwände 40 des Reiters 38 in der Funktionsstellung des Adapters 16 auf den beiden Führungsleisten 70. Zusätzlich zu dem in dieser Funktionsstellung des Adapters 16 in der Rastöffnung 52 aufgenommenen Rastpin 50 sorgt ein Anschlag 76 dafür, dass der Adapter 16 und mit diesem der Kombistecker 20 maximal bis zum Erreichen dieser Funktionsstellung des Adapters 16 in den Endbereich 18 des Wischarms 12 hineingeschoben werden kann, wenn das Wischblatt 14 an den Wischarm 12 montiert wird. Wenn der Adapter die in Fig. 4 gezeigte Funktionsstellung erreicht hat, befindet sich nämlich der Anschlag 76 in Anlage mit der Führungsleiste 70.

Fig. 4 zeigt weiterhin, dass durch den Reiter 26 eine Stirnwand 78 gebildet ist, durch welche der nach vorne hin offene Endbereich 18 des Wischarms 12 in optisch ansprechender Weise zumindest bereichsweise geschlossen ist. In einer in der Stirnwand 78 vorgesehenen Kerbe 79 ist ein nach oben stehender Steg 80 des Spoilers 32 aufgenommen (vgl. Fig. 1).

Aus Fig. 4 geht auch hervor, dass in einem der beiden Schenkel 72 des Wischarms 12 eine Ausnehmung 82 vorgesehen ist, welche beim Verschwenken des Wischblatts 14 um die Drehachse 36 den Steg 80 aufnimmt.

Fig. 5 zeigt besonders gut die beiden in Längserstreckungsrichtung des Wischblatts 14 und des Wischarms 12 verlaufenden Kanäle 30, welche durch den Spoiler 32 gebildet sind. Zudem ist aus Fig. 5 erkennbar, dass der Kombistecker 20 zwei Anschlussstutzen 84 umfasst, welche mit (nicht gezeigten) Schlauchleitungen gekoppelt werden, um dem Wischblatt 14 Waschflüssigkeit zuführen zu können. Die beiden Anschlussstutzen 84 erstrecken sich in eine Z-förmige Biegung 86 hinein, welche der Wischarm 12 zu seinem Endbereich 18 aufweist (vgl. Fig. 1).

Wenn der Kombistecker 20 in die in Fig. 6 gezeigte Montageposition bzw. Demontageposition verschoben, also durch Ziehen an dem Adapter 16 in Längserstreckungsrichtung des Wischarms 12 hin zu dem vorderen Ende des Wischarms 12 bewegt wird, so können die in der Biegung 86 verlegten Schlauchleitungen diesen Weg mitgehen. Alternativ können die Schlauchleitungen dehnbar ausgeführt sein, etwa nach Art von Wellrohren. Die zu den elektrischen Anschlüssen 34 des Kombisteckers 20 führenden und im Wischarm 12 verlegten elektrischen Leitungen können in den Schlauchleitungen verlegt sein und so ebenfalls der Bewegung des Kombisteckers 20 nach vorne problemlos folgen. Alternativ können die elektrischen Leitungen mit Überlänge in dem Wischarm 12 verlegt sein.

Bei der Demontage des Wischblatts 14 vom Wischarm 12 wird der Adapter 16 nach vorne aus dem Endbereich 18 des Wischarms 12 herausgezogen, wenn sich der Kombistecker 20 in der in Fig. 6 gezeigten Demontageposition befindet. In dieser Demontageposition ist der Rastpin 66 des Kombisteckers 20 in der Rastöffnung 52 verrastet, welche im Rücken 54 des Wischarms 12 in dessen Endbereich 18 vorgesehen ist. Zudem ist in der Demontageposition die Stirnwand 78 des zum Adapter 16 gehörenden Reiters 26 von dem vorderen Ende des Wischarms 12 beabstandet.

Durch weiteres Ziehen an dem Adapter 16 in die Längserstreckungsrichtung des Wischarms 12 werden der Kombistecker 20 und der Adapter 16 voneinander getrennt. Wenn die Rastelemente 60 die an dem Kombistecker 20 vorgesehenen Zapfen 58 freigeben, ist dieses Entriegelungsgeräusch von der Bedienperson deutlich hörbar. Die Bedienperson hört also beim Demontieren des Wischblatts 14 vom Wischarm 12 zunächst das Einrasten des Rastpins 66 in der Rastöffnung 52 und dann das Trennen der Rastelemente 60 und der Zapfen 58.

Wenn der Adapter 16 in eine mit der Längserstreckungsrichtung des Wischblatts 14 und des Wischarms 12 zusammenfallende Montagerichtung, welche in Fig. 7 durch einen Pfeil 88 veranschaulicht ist, in den Endbereich 18 des Wischarms 12 eingeführt wird, so unterstützten an dem Reiter 26 vorgesehene Einführschrägen 90 diesen Vorgang.

Sobald der Adapter 16 dann mit dem Kombistecker 20 gekoppelt ist und die Arme 62 der Rastelemente 60 die beiden am Kombistecker 20 angeordneten Zapfen 58 hintergreifen, kann die Bedienperson anhand des Einrastgeräusches der Omegaklipps feststellen, dass der Adapter 16 mit dem Kombistecker 20 verbunden ist. Anschließend wird der sich in der Rastöffnung 52 befindende Pin 66 des Kombisteckers 20 nach unten gedrückt und der Adapter 16 weiter zusammen mit dem Kombistecker 20 in die Montagerichtung verschoben, bis der an dem Reiter 38 des Adapters 16 vorgesehene Pin 50 in der Rastöffnung 52 einrastet.

Auch dieses Rastgeräusch ist von der Bedienperson akustisch wahrnehmbar, und zudem ist das Einrasten des Rastpins 50 in der Rastöffnung 52 optisch wahrnehmbar. Sobald sich der Adapter 16 mit diesem das Wischblatt 14 in der in Fig. 1 gezeigten Funktionsstellung befindet, ist der Adapter 16 sicher an dem Wischarm 12 gehalten, und die Scheibe kann über das Wischblatt 14 mit Waschflüssigkeit beaufschlagt werden.

## Patentansprüche

1. Wischarmanordnung mit einem Wischarm (12) einer Scheibenwischanlage eines Fahrzeugs, und mit einem wenigstens eine Leitung (22) aufweisenden Anschlusselement (20), welches mit einem zum Halten eines Wischblatts (14) und zum Verbinden des Wischblatts (14) mit dem Wischarm (12) ausgebildeten Anbindungselement (16) koppelbar ist, wobei durch das Koppeln wenigstens eine korrespondierende Leitung (24) des Anbindungselements (16) an die wenigstens Leitung (22) des Anschlusselements (20) anschließbar ist, und wobei das Anbindungselement (16) in eine Montagerichtung (88) an das Anschlusselement (20) montierbar ist, welche zumindest im Wesentlichen mit einer Längserstreckungsrichtung (88) des Wischarms (12) zusammenfällt,
**dadurch gekennzeichnet, dass**
das Anschlusselement (20) in die Längserstreckungsrichtung des Wischarms (12) bewegbar an dem Wischarm (12) angeordnet ist.

2. Wischarmanordnung nach Anspruch 1,
**dadurch gekennzeichnet, dass**
das Anschlusselement (20) in einem mit dem Anbindungselement (16) gekoppelten Zustand durch Bewegen des Anbindungselements (16) in die Längserstreckungsrichtung (88) bewegbar ist.

3. Wischarmanordnung nach Anspruch 1 oder 2,
**dadurch gekennzeichnet, dass**
ein Endbereich (18) des Wischarms (12) wenigstens eine, insbesondere in einem Rücken (54) des Wischarms (12) angeordnete, Rastöffnung (52) aufweist, in welcher in einer Funktionsstellung des Anbindungselements (16) ein korrespondierendes Rastelement (50) des Anbindungselements (16) aufnehmbar ist.

4. Wischarmanordnung nach Anspruch 3,
**dadurch gekennzeichnet, dass**
wenigstens ein an dem Anschlusselement (20) angeordnetes Rastelement (66) durch ein Verbringen des Anschlusselements (20) in eine Montageposition in die im Endbereich (18) des Wischarms (12) angeordnete wenigstens eine Rastöffnung (52) einbringbar ist.

5. Wischarmanordnung nach Anspruch 4,
**dadurch gekennzeichnet, dass**
beim Verbringen des Anschlusselements (20) in die Montageposition das Anschlusselement (20) an einer wischarmseitigen Führung (70) geführt ist, bevor das wenigstens eine Rastelement (66) des Anschlusselements (20) in die im Endbereich (18) des Wischarms (12) angeordnete korrespondierende Rastöffnung (52) eingreift.

6. Wischarmanordnung nach Anspruch 4 oder 5,
**dadurch gekennzeichnet, dass**
bei in der Montageposition an dem Wischarm (12) fixiertem Anschlusselement (20) das Anbindungselement (20) durch ein weiteres Bewegen des Anbindungselements (16) in die Längserstreckungsrichtung (88) des Wischarms (12) von dem Anschlusselement (20) lösbar ist.

7. Wischarmanordnung nach einem der Ansprüche 4 bis 6,
**gekennzeichnet durch**
wenigstens einen Anschlag (68) zum Begrenzen der Bewegung des Anschlusselements (20) in der Längserstreckungsrichtung (88) bei in die Montageposition verbrachtem Anschlusselement (20).

8. Wischarmanordnung nach einem der Ansprüche 1 bis 7,
**dadurch gekennzeichnet, dass**
die wenigstens eine Leitung (22) zum Einbringen von Waschflüssigkeit und/oder von Heizenergie in das Anbindungselement (16) ausgebildet ist.

9. Wischarmanordnung nach einem der Ansprüche 1 bis 8,
**dadurch gekennzeichnet, dass**
die Wischarmanordnung das Anbindungselement (16) umfasst, welches wenigstens ein Rastelement (60) aufweist, welches eine in die Montagerichtung (88) offene Ausnehmung umfasst, in welcher im mit dem Anschlusselement (20) gekoppelten Zustand ein an dem Anschlusselement (20) angeordneter Zapfen (58) verrastet aufgenommen ist.

10. Wischarmanordnung nach einem der Ansprüche 1 bis 9,
**dadurch gekennzeichnet, dass**
die Wischarmanordnung das Anbindungselement (16) aufweist, welches ein an dem Wischarm (12) angeordnetes Oberteil (38) umfasst, an welchem ein zum Halten des Wischblatts (14) ausgebildetes, insbesondere ein das Einführen in einen Endbereich (18) des Wischarms (12) erleichterndes Einführelement (90) aufweisendes, Unterteil (26) des Anbindungselements (16) um eine Drehachse (36) drehbar gelagert ist.

## Claims

1. Wiper arm assembly, comprising a wiper arm (12) of a windscreen wiper system of a vehicle and a connecting element (20), which is provided with at least one line (22) and which can be coupled to a joining element (16) designed for holding a wiper blade (14) and for joining the wiper blade (14) to the wiper arm (12), wherein in the coupling process at least one corresponding line (24) of the joining element (16) can be connected to the at least one line (22) of the connecting element (20), and wherein the joining element (16) can be mounted on the connecting element (20) in a mounting direction (88) which at least substantially coincides with a direction of the longitudinal dimension (88) of the wiper arm (12), **characterised in that**
the connecting element (20) is located on the wiper arm (12) while being movable in the direction of the longitudinal dimension of the wiper arm (12).

2. Wiper arm assembly according to claim 1,
**characterised in that**
the connecting element (20) is movable in the direction of the longitudinal dimension (88) in a state in which it is coupled to the joining element (16) by moving the joining element (16).

3. Wiper arm assembly according to claim 1 or 2,
**characterised in that**
an end region (18) of the wiper arm (12) comprises at least one latching opening (52), which is in particular located in a back (54) of the wiper arm (12) and in which a corresponding latching element (50) of the joining element (16) can be accommodated in a functional position of the joining element (16).

4. Wiper arm assembly according to claim 3,
**characterised in that**
at least one latching element (66) located on the connecting element (20) can be moved into the at least one latching opening (52) located in the end region (18) of the wiper arm (12) by moving the connecting element (20) into a mounting position.

5. Wiper arm assembly according to claim 4,
**characterised in that**
when moving the connecting element (20) into a mounting position, the connecting element (20) is guided on a guide (70) provided on the wiper arm before the at least one latching element (66) of the connecting element (20) comes into engagement with the corresponding latching opening (52) located in the end region (18) of the wiper arm (12).

6. Wiper arm assembly according to claim 4 or 5,
**characterised in that**
when the connecting element (20) is secured to the wiper arm (12) in the mounting position, the joining element (16) can be released from the connecting element (20) by a further movement of the joining element (16) in the direction of the longitudinal dimension (88) of the wiper arm (12).

7. Wiper arm assembly according to any of claims 4 to 6,
**characterised by**
at least one stop (68) for limiting the movement of the connecting element (20) in the direction of the longitudinal dimension (88) when the connecting element (20) is moved into the mounting position.

8. Wiper arm assembly according to any of claims 1 to 7,
**characterised in that**
the at least one line (22) is designed for introducing washer fluid and/or heating energy into the joining element (16).

9. Wiper arm assembly according to any of claims 1 to 8,
**characterised in that**
the wiper arm assembly includes the joining element (16), which has at least one latching element (60) with a recess open in the mounting direction (88), in which recess a pin (58) located on the connecting element (20) is latched in the state in which it is coupled to the connecting element (20).

10. Wiper arm assembly according to any of claims 1 to 9,
**characterised in that**
the wiper arm assembly comprises the joining element (16), which has an upper part (38), which is located on the wiper arm (12) and on which a lower part (26) of the joining element (16), which is designed for holding the wiper blade (14) and which is in particular provided with an insertion element (90) facilitating insertion into an end region (18) of the wiper arm (12), is mounted for rotation about an axis of rotation (36).

## Revendications

1. Agencement de bras d'essuie-glace doté d'un bras d'essuie-glace (12) d'une installation d'essuie-glace d'un véhicule automobile, et doté d'au moins un élément de raccordement (20) présentant une conduite (22), ledit élément de raccordement peut être couplé à un élément de liaison (16) conçu pour maintenir une raclette d'essuie-glace (14) et pour relier la raclette d'essuie-glace (14) au bras d'essuie-glace (12), par le couplage au moins une conduite (24) correspondante de l'élément de liaison (16) peut être raccordée à au moins la conduite (22) de l'élément de raccordement (20), et l'élément de liaison (16) pouvant être monté dans une direction de montage (88) sur l'élément de raccordement (20), qui au moins essentiellement coïncide avec une direction d'extension longitudinale (88) du bras d'essuie-glace (12), **caractérisé en ce que** l'élément de raccordement (20) est disposé mobile dans la direction d'extension longitudinale du bras d'essuie-glace (12) sur le bras d'essuie-glace (12).

2. Agencement de bras d'essuie-glace selon la revendication 1, **caractérisé en ce que** l'élément de raccordement (20) peut se déplacer dans un état couplé avec l'élément de liaison (16) par déplacement de l'élément de liaison dans la direction d'extension longitudinale (88).

3. Agencement de bras d'essuie-glace selon la revendication 1 ou la revendication 2, **caractérisée en ce qu'**une zone d'extrémité (18) du bras d'essuie-glace (12) présente au moins une ouverture (52) d'enclenchement disposée en particulier dans la partie arrière (54) du bras d'essuie-glace (12), dans laquelle peut se loger un élément d'enclenchement (50) correspondant de l'élément de liaison (16) lorsque l'élément de liaison (16) est dans une position de fonctionnement.

4. Agencement de bras d'essuie-glace selon la revendication 3, **caractérisé en ce que** au moins un élément d'enclenchement (66) disposé sur l'élément de raccordement (20), lorsque l'élément de raccordement (20) passe dans une position de montage, peut être introduit dans l'au moins une ouverture d'enclenchement (52) disposée dans la zone d'extrémité (18) du bras d'essuie-glace (12).

5. Agencement de bras d'essuie-glace selon la revendication 4, **caractérisé en ce que**, lorsque l'élément de raccordement (20) passe dans la position de montage, l'élément de raccordement (20) est amené sur un élément de guidage (70) côté bras d'essuie-glace avant que l'au moins un élément d'enclenchement (66) de l'élément de raccordement (20) ne s'encliquète dans l'ouverture d'enclenchement (52) correspondante disposée dans la zone d'extrémité (18) du bras d'essuie-glace (12).

6. Agencement de bras d'essuie-glace selon la revendication 4 ou 5, **caractérisé en ce que** lorsque l'élément de raccordement (20) est bloqué dans la position de montage sur le bras d'essuie-glace (12), l'élément de liaison (20) peut se détacher de l'élément de raccordement (20) par un autre déplacement de l'élément de liaison (16) dans la direction d'extension longitudinale (88) du bras d'essuie-glace (12).

7. Agencement de bras d'essuie-glace selon l'une quelconque des revendications 4 à 6, **caractérisé par** au moins une butée (82) conçue pour limiter le mouvement de l'élément de raccordement (20) dans la direction d'extension longitudinale (88) lorsque l'élément de raccordement (20) est amené dans la position de montage.

8. Agencement de bras d'essuie-glace selon l'une quelconque des revendications 1 à 7, **caractérisé en ce que** l'au moins une conduite (22) est conçue pour introduire du liquide de nettoyage et/ou de l'énergie de chauffage dans l'élément de liaison (16).

9. Agencement de bras d'essuie-glace selon l'une quelconque des revendications 1 à 8, **caractérisé en ce que** l'agencement de bras d'essuie glace comprend l'élément de liaison (16) qui comprend au moins un élément d'enclenchement (60) qui comprend un évidemment ouvert dans la direction de montage (88) dans lequel est encliqueté dans un état couplé avec l'élément de raccordement (20) un tenon (58) disposé sur l'élément de liaison (20).

10. Agencement de bras d'essuie-glace selon l'une quelconque des revendications de 1 à 9, **caractérisé en ce que** l'agencement de bras d'essuie-glace comprend l'élément de liaison (16) qui comprend une partie supérieure (38) disposée sur le bras d'essuie-glace (12) sur laquelle une partie inférieure (26) de l'élément de liaison (16) conçue pour retenir la raclette d'essuie-glace (14) est montée en rotation autour d'un axe de rotation (36), présentant en particulier un élément d'introduction (90) facilitant l'introduction du bras d'essuie-glace (12) dans une zone d'extrémité (18).
